# EUROPÄISCHE PATENTANMELDUNG

(11) **EP 1 133 913 A2**
(43) Veröffentlichungstag der Anmeldung: **19.09.2001**
(21) Anmeldenummer: 01102548.3
(22) Anmeldetag: 06.02.2001
(51) Int. Cl.: A01F 15/07

(54) **Rundballenpresse**

(30) Priorität: 12.02.2000 DE 10006384
(71) Anmelder: DEERE & COMPANY, Moline, Illinois 61265-8098 (US)
(72) Erfinder: Viaud, Jean, 70100 Gray (FR)
(74) Vertreter: Magin, Ludwig Bernhard

(57) **Zusammenfassung**

2.1. Bekannte Rundballenpressen, die für einen Betrieb ohne Unterbrechung ausgebildet sind, weisen ein Gehäuse auf, das mittels beweglicher Spannarme und über diese verlaufende Trume von Riemen in einen vorderen oder einen rückwärtigen Ballenpreßraum unterteilt werden kann. Wenn der Rundballen in dem vorderen Ballenpreßraum gebildet wird, muß er nach seiner Bildung seitwärts abgeladen werden. Außerdem bedarf es einer speziellen Gutführung innerhalb des Gehäuses, um das Erntegut dem jeweiligen Ballenpreßraum zuzuführen.

2.2. Es wird eine Rundballenpresse (10) vorgeschlagen, deren Ballenpreßraum (30) von einem oberen und einem unteren Gehäuseabschnitt (18) und (20) gebildet wird, wobei der obere Gehäuseabschnitt (20) gegenüber dem unteren horizontal beweglich ist und sich der untere Gehäuseabschnitt (18) über eine größere Strecke als der obere erstreckt, so daß Ballenpreßräume (30) an verschiedenen Stellen gebildet werden können.

2.3. Rundballenpressen werden in der Landwirtschaft eingesetzt und industriell gefertigt.

## Beschreibung

Die Erfindung betrifft eine Rundballenpresse mit einem Ballenpreßgehäuse, das sich aus einem unteren und einem oberen Gehäuseabschnitt zusammensetzt, wobei der obere Gehäuseabschnitt in einen vorderen und einen rückwärtigen Wandabschnitt gegliedert ist, die zur Öffnung eines Ballenpreßraums vertikal beweglich sind.

Die EP-A-0 064 116 offenbart eine Rundballenpresse mit einer ersten und einer zweiten Ballenpreßkammer, die abwechselnd beschickt werden können und somit einen ununterbrochenen Betrieb ermöglichen. Zu diesem Zweck ist ein Satz Riemen vorgesehen, der sich in einem vorderen und einem rückwärtigen Gehäuseteil und über einen dazwischenliegenden Bereich erstreckt. In dem mittigen Bereich sind zwei gelenkig miteinander verbundene Spannarme vorgesehen, die den entsprechenden Riemenabschnitt so lenken, daß sich in dem vorderen oder dem rückwärtigen Gehäuseteil die Ballenpreßkammer ergibt. Sobald in der rückwärtigen Ballenpreßkammer ein Rundballen gebildet ist, wird er dort gebunden und ausgeworfen. Währenddessen wird in der vorderen Ballenpreßkammer ein Rundballen gebildet und nach seiner Fertigstellung auf einen Seitenförderer zur Ablage neben der Rundballenpresse gelegt.

Das der Erfindung zugrunde liegende Problem wird darin gesehen, daß zur Abgabe des Rundballens aus der vorderen Ballenpreßkammer ein eigener Förderer erforderlich ist und es einer aufwendigen Mechanik bedarf, um die Riemen entsprechend zu führen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der gebildete Rundballen stets an der gleichen Stelle der Rundballenpresse verbleiben, wo er gebunden und gewickelt oder nur abgegeben wird. Ein Seitenförderer ist nicht mehr erforderlich. Es findet eine wesentliche Vereinfachung des Aufbaus statt, da nicht mehr zwei Ballenpreßräume sondern nur einer gebildet wird, der allerdings seine Lage verändern kann. Mit dieser Vereinfachung im Aufbau geht auch eine entsprechende Reduzierung des Gesamtgewichts einher. Der obere Gehäuseabschnitt kann in entsprechender Ausbildung einstückig und in sich beweglich geformt werden, ober zwei oder mehr miteinander verbundene oder verbindbare in sich abgeschlossene und feste Abschnitte aufweisen. Der obere Gehäuseabschnitt kann entsprechend geknickt, gebogen oder in sonstiger Weise in seiner Form geändert werden, damit er den Ballenpreßraum, z. B. in der Form einer gebogenen Zange, von oben her umgibt. Während des Ballenbildungsvorgangs rollt der Rundballen auf dem unteren Gehäuseabschnitt ab. Beide Gehäuseabschnitte können Walzen, Riemen auf starren Walzen, Riemen auf ortsveränderlichen Walzen, Stabketten und dergl. aufweisen, um den Rundballen zu führen, drehen und zu pressen. Es ist sowohl denkbar, daß der obere Gehäuseabschnitt feststeht und sich der untere Gehäuseabschnitt bewegt, oder der obere Gehäuseabschnitt beweglich ist und der untere seine Lage nicht ändert.

Wenn der obere Gehäuseabschnitt nur von dem vorderen und dem rückwärtigen Wandabschnitt gebildet wird, die den Ballenpreßraum in dessen oberen Bereich umgeben, entfällt der aus dem Stand der Technik bekannte mittlere Bereich, was zu einer Vereinfachung der Rundballenpresse und zu einer zuverlässigeren Führung des Rundballens führt.

Wenn der obere vordere und rückwärtige Wandabschnitt gemeinsam in eine im wesentlichen horizontale und von dem unteren Gehäuseabschnitt um die Höhe eines in dem Ballenpreßgehäuse gebildeten Ballens beabstandete Stellung bringbar sind, wird der Zugang zu seiner Umfangs- und Stirnfläche in einem beträchtlichen Maße frei, so daß er für eine weitere Bearbeitung oder für den Transport erfaßt werden kann. Desgleichen ist der obere Gehäuseabschnitt nicht mehr in Eingriff mit dem Rundballen und kann in seine andere Stellung gebracht werden, in der er einen zweiten Ballenpreßraum bildet.

Der untere Gehäuseabschnitt kann einteilig ausgebildet werden und z. B. auf seiner ganzen Länge einen Band- oder Stabkettenförderer oder eine Vielzahl parallelachsiger Walzen aufweisen. Wird jedoch der untere Gehäuseabschnitt einerseits z. B. mit Walzen auf einem Teil eines Kreisbogens gebildet und andererseits in der Art eines Bandförderers, dann können auch unterschiedliche Funktionen verwirklicht werden, z. B. sind Walzen geeignet, den hohen Verdichtungskräften beim Preßvorgang standzuhalten. Währenddessen kann eine andere Art eines Förderers, z. B. mit Riemen, Ketten oder dergleichen einen Zwischenspeicher für das Erntegut in der Startphase der Ballenbildung an der Unterseite begrenzen und das lose Erntegut befördern.

Die Verwendung eines Bandförderers als unteren Gehäuseabschnitt hat bei losem bröckeligem Erntegut den Vorteil, daß Blätter und andere lose Pflanzenteile nicht verloren gehen, sondern in der Erntegutmatte enthalten bleiben.

Die erfindungsgemäße Rundballenpresse kann zur Herstellung von Rundballen aus Silage verwendet werden, wenn sie mit einer entsprechenden Wickelvorrichtung versehen ist. Beispielsweise kann diese Wickelvorrichtung eine oder mehrere Rollen mit Stretch-Folie aufweisen, die unter Spannung auf den Rundballen aufgelegt wird. Vorzugsweise befindet sich die Wickelvorrichtung oberhalb des rückwärtigen unteren- Förderers am rückwärtigen Ende der Rundballenpresse, so daß ein gewickelter Rundballen unmittelbar und am rückwärtigen Ende der Rundballenpresse ohne seitliche Förderung auf den Boden abgegeben werden kann.

Damit ein in dem Ballenpreßgehäuse gebildeter Rundballen glatte Stirnflächen aufweist, sind seitliche Wandungen, vorwiegend aus glatten Blechtafeln, vorgesehen. Diese Wandungen sind mit den oberen Wandabschnitten verlagerbar, so daß diese Wirkung unabhängig von der Lage des Ballenpreßgehäuses eintritt.

Mittels eines vertikal, d. h. um eine waagrechte Achse, schwenkbaren unteren rückwärtigen Förderers ist es möglich, einen gebildeten Rundballen leicht auf den Boden abzugeben, ohne diesen aus einer größeren Höhe fallenzulassen. Die Schwenkbewegung kann insbesondere mittels eines hydraulischen Stellmotors durchgeführt werden, der vorzugsweise von einer Steuer- oder Regelvorrichtung kontrolliert wird. Diese Steuer- oder Regelvorrichtung bezieht auch die Funktion der Rundballenpresse im übrigen mit ein.

Damit der Rundballen sich nach dem Verlassen des Ballenpreßraums nicht auflöst und ein evtl. Bindevorgang nicht länger dauert, als die Bildung eines Rundballens, ist eine Netzbindevorrichtung vorgesehen, die vorzugsweise an einem der oberen Wandabschnitte entweder vorne oder hinten angebracht ist.

Zur Unterstützung der Förderung des Ernteguts in das Ballenpreßgehäuse ist es insbesondere bei größeren Strecken vorteilhaft, wenn eine Einlaßöffnung und ein diese beschickender Zuförderer vorgesehen sind. Dieser Zuförderer befindet sich stets in der richtigen Stellung und tritt dann in Wirkung, wenn er an dem oberen Wandabschnitt angebracht ist und sich mit diesem in die Betriebsstellung bewegt.

Insbesondere dann, wenn eine Wickelvorrichtung vorhanden ist, die es ermöglicht, Silage herzustellen, kann die Zuverlässigkeit der Rundballenpresse erhöht werden, wenn die Gehäuseabschnitte und insbesondere der untere rückwärtige Förderer, auf dem das gesamte und hohe Ballengewicht ruht, mit Walzen bestückt ist. Zur besseren Aufnahme des Rundballens sind diese Walzen auf einer Kreislinie, bzw. einem Teil einer solchen angeordnet, die sich in entsprechend gelegenen Preßelementen, insbesondere Walzen, an den oberen Wandabschnitten fortsetzt.

Es wäre zwar grundsätzlich möglich, auch den unteren rückwärtigen Förderer als Wickeltisch auszubilden, der sich um eine feststehende vertikale Achse dreht, während ein Wickelarm feststeht; der Aufwand zum Erreichen einer Wickelbewegung ist jedoch geringer, wenn sich der Wickelarm dreht und der Wickeltisch feststeht. Anstatt eines können auch mehrere Wickelarme vorgesehen werden.

Die horizontale Bewegung des oberen Gehäuseabschnitts bzw. der oberen Wandabschnitte läßt sich in einfacher Weise dadurch erreichen, daß eine oder mehrere vorzugsweise in der Fahrtrichtung angeordnete Schienen vorgesehen sind, in, auf oder an denen diese gleitend oder rollend aufgenommen sind. Die Bewegung kann z. B. mittels entsprechender hydraulischer Motoren erreicht werden. Die Schienen können als U-Schienen oder T-Schienen ausgebildet werden oder auch als geschlossene Rohre. Diese Schienen können gleichzeitig einen Bestandteil des Fahrgestells der Rundballenpresse bilden, an dem andere Komponenten und Verkleidungsteile befestigt sind.

Wenn der Zuförderer rückwärts und vorwärts angetrieben werden kann, ist er in der Lage, das Erntegut einmal in den Ballenpreßraum einzuführen und einmal von diesem fernzuhalten, um es für den anschließenden Preßvorgang zu speichern.

In der Zeichnung ist ein nachfolgend näher beschriebenes Ausführungsbeispiel der Erfindung dargestellt. Es zeigt:
- Fig. 1: eine erfindungsgemäße Rundballenpresse in schematischer Ansicht von der Seite beim Befüllen eines rückwärtigen Ballenpreßraumes,
- Fig. 2: die Rundballenpresse aus Figur 1 mit einem gefüllten rückwärtigen Ballenpreßraum,
- Fig. 3: die Rundballenpresse aus Figur 1 während eines Bindevorgangs,
- Fig. 4: die Rundballenpresse aus Figur 1 während der Zufuhr von Erntegut in einen Bereich oberhalb eines vorderen Förderers und bei angehobenen oberen Wandabschnitten des oberen Gehäuseabschnittes,
- Fig. 5: die Rundballenpresse aus Figur 1, wobei sich die oberen Wandabschnitte im Bereich des vorderen unteren Förderers befinden,
- Fig. 6: die Rundballenpresse aus Figur 1, wobei die oberen Wandabschnitte ein vorne gelegenes Ballenpreßgehäuse bilden und der zuvor in dem hinten gelegenen Ballenpreßgehäuse gebildete Rundballen mit Folie umwickelt wird,
- Fig. 7: die Rundballenpresse aus Figur 1, wobei der Wickelprozeß beendet ist, und
- Fig. 8: die Rundballenpresse aus Figur 1, während der Rundballen ausgeworfen wird.

Eine in der Zeichnung dargestellte erfindungsgemäße Rundballenpresse 10 enthält ein Fahrgestell 12, Räder 14, eine Aufnahmevorrichtung 16, einen unteren und einen oberen Gehäuseabschnitt 18 und 20 eines Ballenpreßgehäuses 8, eine Wickelvorrichtung 22, eine Bindevorrichtung 24 und einen Zuförderer 26.

Die erfindungsgemäße Rundballenpresse 10 stellt im wesentlichen eine Maschine dar, mit der, ohne den Betrieb für eine Entladung eines gebildeten Rundballens 28 zu unterbrechen, gearbeitet werden kann. Darüber hinaus ist sie mit den jeweiligen Ausrüstungen in der Lage, den Rundballen 28 zu binden oder mit Folie zu umwickeln. Die Erntegüter wie Gras, Heu, Stroh und dergl. können trocken oder naß gepreßt werden, um Silage herzustellen.

Das Fahrgestell 12 weist einen nicht gezeigten Tragrahmen auf, der mittels einer ebenfalls nicht gezeigten Deichsel an ein Zugfahrzeug zur Fahrt über das Feld angeschlossen werden kann. Das Fahrgestell 12 ist relativ lang ausgebildet, um so Platz für Ballenpreßräume 30 an zwei Stellen zu bilden. Im wesentlichen parallel zu dem Boden, auf dem die Rundballenpresse 10 steht bzw. fährt, ist eine Führungsvorrichtung 32 vorgesehen, die sich im wesentlichen über die gesamte Länge des Fahrgestells 12 erstreckt und einen Freiraum zu dem Tragrahmen beläßt, der bei dem bevorzugten Ausführungsbeispiel im wesentlichen der Höhe des Ballenpreßraums 30 entspricht. Allerdings kann sich die Führungsvorrichtung 32 auch tiefer, z. B. auf der Höhe des bzw. der Ballenpreßräume 30 erstrecken.

Die Räder 14 sind bei dem bevorzugten Ausführungsbeispiel, jedoch nicht zwingend, an zwei Tandemachsen angebracht, die vorzugsweise mittels einer Federung an dem Fahrgestell 12 befestigt sind.

Die Aufnahmevorrichtung 16 ist in bekannter Weise als ein Pick-Up-Förderer ausgebildet, d. h. sie weist eine Vielzahl in vertikalen Ebenen umlaufender Zinken auf, die Erntegut vom Boden anheben und nach oben fördern. An dem abgabeseitigen Ende der Aufnahmevorrichtung 16 ist ein Zwischenförderer 34 vorgesehen, der auch als ein Schneidwerk ausgebildet sein kann und Erntegut durch einen Kanal fördert, der sich zwischen einem Boden 36 der Aufnahmevorrichtung 16 und einem ansteigend verlaufenden Leitblech 38 ergibt, wobei sich der Zwischenförderer 34 mit nicht näher bezeichneten Zinken durch nicht ersichtliche Schlitze in dem Leitblech 38 erstreckt und das Erntegut erfaßt. An das Leitblech 38 schließen sich rückwärtig im wesentlichen horizontal verlaufende Seitenbleche 40 an, die den unteren Gehäuseabschnitt 18 seitlich begrenzen, um den zuvor genannten Kanal fortzuführen. Auf diese Weise kann das Erntegut nicht seitlich herabfallen.

Der untere Gehäuseabschnitt 18 enthält in diesem speziellen Ausführungsbeispiel einen vorderen und einen rückwärtigen Förderer 42 und 44, die aneinander anschließen und das angenommene Fördergut auf ihrer Oberfläche tragen. Insgesamt erstrecken sich beide Förderer 42, 44 im wesentlichen über die Länge des Fahrgestells 12. Beide Förderer 42, 44, haben eine Förderfläche gleicher Breite, nicht notwendigerweise aber von gleicher Länge. Der vordere und der rückwärtige untere Förderer 42, 44 werden auf herkömmliche Weise, z. B. mittels Ketten oder Wellen oder mittels Hydraulikmotoren vorzugsweise synchron angetrieben. Allerdings können insbesondere dann unterschiedliche Antriebsgeschwindigkeiten gewählt werden, wenn der vordere Förderer 42 in den Preßvorgang des Rundballens 28 und der rückwärtige Förderer 44 in den Umwickelvorgang eines anderen Rundballens 28 mit einbezogen wird.

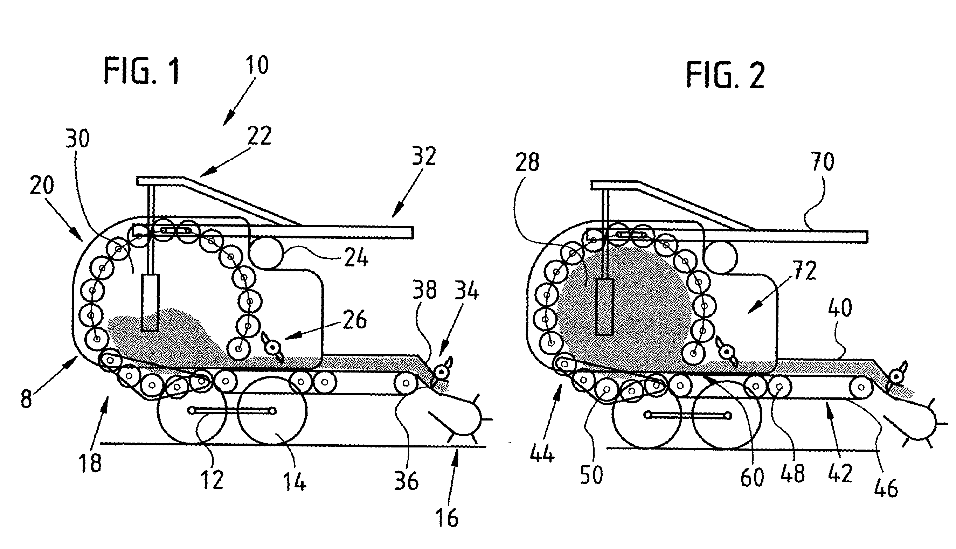

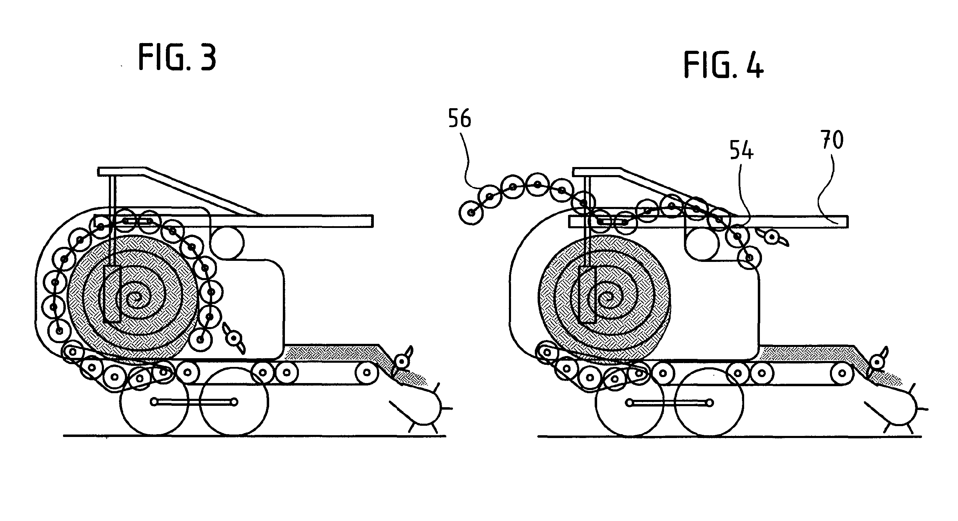

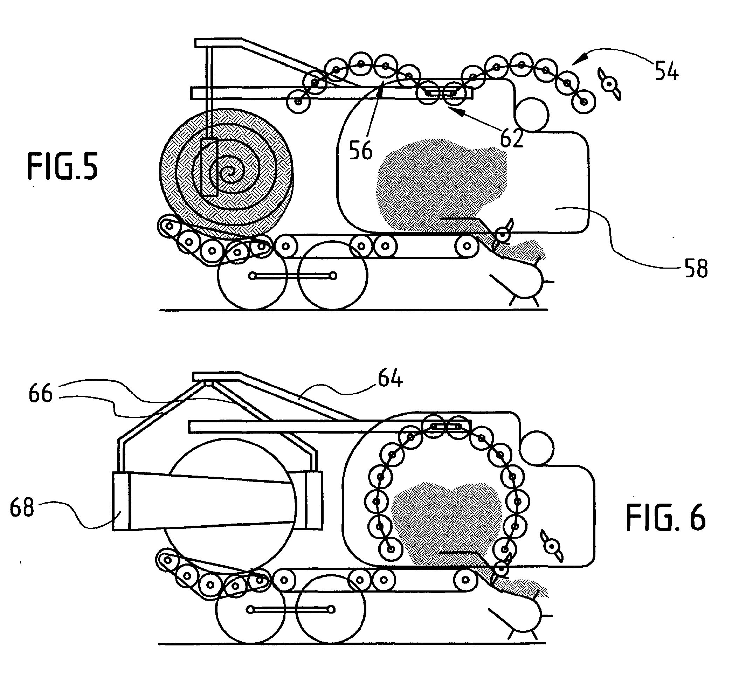

Der vordere Förderer 42 schließt sich unmittelbar an das Abgabeende der Aufnahmevorrichtung 16, d. h. an den Auslaß des zwischen dem Boden 36 und dem Leitblech 38 gebildeten Kanals an. Der vordere Förderer 42 ist als Bandförderer ausgebildet und enthält ein Förderband 46 und mehrere dieses -stützende, umlenkende oder angetriebene Rollen 48. Die Rollen 48 sind so angeordnet, daß sich das obere Trum des Förderbands 46 in einer geraden Ebene erstreckt; allerdings könnten die Rollen 48 auch so angeordnet werden, daß sich eine Senke oder Mulde ergibt, in der der Rundballen 28 teilweise aufgenommen werden kann. Der untere vordere Förderer 42 überbrückt den Bereich zwischen der Aufnahmevorrichtung 16 und dem rückwärtigen Förderer 44 und wirkt in dem Zustand gemäß Figur 1 und 2 als reiner Förderer zwischen der Aufnahmevorrichtung 16 und dem unteren rückwärtigen Förderer 44, in dem Zustand nach den Figuren 3 bis 5 als Speicher für Erntegut, das von der Aufnahmevorrichtung 16 angenommen wurde, aber nicht in den hinten gelegenen Ballenpreßraum 30 eingespeist werden kann, und in dem Zustand nach den Figuren 6 bis 8 als Träger und Antreibmittel für einen sich in Bildung befindlichen Rundballen 28.

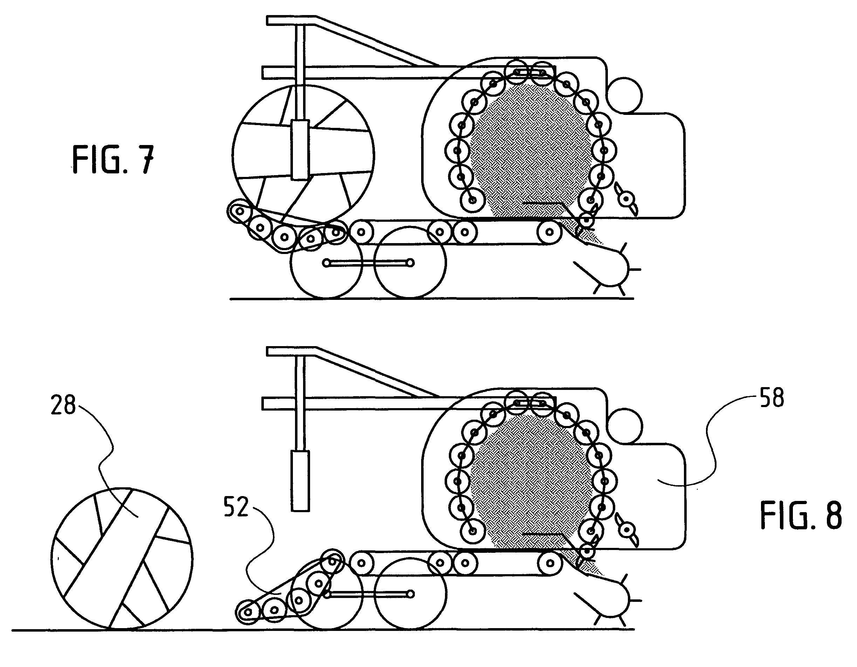

Der untere rückwärtige Förderer 44 ist in der Form einer Wanne gebildet, deren Boden von Walzen 50 gebildet wird, die einer Kreislinie folgen. Die Walzen 50 sind in Seitenwänden 52 drehbar und zumindest teilweise antreibbar gelagert. Die Seitenwände 52 sind mit den Walzen 50 in dem Tragrahmen um eine zumindest gedachte horizontale Achse vertikal schwenkbar und können eine Stellung gemäß Figur 8 oder einer der anderen Figuren einnehmen. Der rückwärtige untere Förderer 44 wird in seiner waagrechten Arbeitsstellung mittels einer nicht gezeigten Arretiervorrichtung gehalten und z. B. mittels eines Hydraulikmotors verstellt. Der untere rückwärtige Förderer 44 trägt mit Ausnahme des Zustandes nach Figur 8 stets Erntegut - entweder zum Bilden eines Rundballens 28, oder um diesen zu wickeln oder abzuwerfen.

Der obere Gehäuseabschnitt 20 umgibt den Ballenpreßraum 30 in seinem oberen Bereich, d. h. oberhalb des unteren Gehäuseabschnitts 18. Der obere Gehäuseabschnitt 20 ist gegenüber dem unteren Gehäuseabschnitt 18 an der Führungsvorrichtung 32 in der Fahrtrichtung -horizontal beweglich gelagert und kann somit einen rückwärtigen Ballenpreßraum 30 oberhalb des rückwärtigen unteren Förderers 44 oder einen vorderen Ballenpreßraum 30 oberhalb des vorderen unteren Förderers 42 bilden.

Der obere Gehäuseabschnitt 20 enthält einen vorderen Wandabschnitt 54, einen rückwärtigen Wandabschnitt 56 und seitliche Wandungen 58.

Der vordere und der rückwärtige Wandabschnitt 54 und 56 sind im wesentlichen analog ausgebildet und spiegelbildlich zueinander angeordnet und umschließen den Umfang des Ballenpreßraums 30 zu ca. 240 Grad. Beide Wandabschnitte 54, 56 enthalten drehbar gelagerte Walzen 50, deren Drehachsen im Zustand nach den Figuren 1 bis 3 auf einer im wesentlichen geschlossenen Kreislinie liegen, wobei zwischen der Unterseite des vorderen oberen Wandabschnitts 54 und dem unteren Gehäuseabschnitts 18 eine Einlaßöffnung 60 vorgesehen ist, deren Weite ungefähr der einer Walze 50 entspricht. Im Bereich ihrer oberen Enden sind beide Wandabschnitte 54, 56 in einem Gelenk 62 vertikal schwenkbar miteinander verbunden, so daß sie zwischen einer Stellung z. B. gemäß Figur 1 und einer Stellung gemäß Figur 5 bewegt werden können. Zur Verstellung der Wandabschnitte 54, 56 können nicht gezeigte, getrennte oder gemeinsame Betätigungsvorrichtungen, z. B. Hydraulikzylinder oder Seile verwendet werden. Die Betätigungsvorrichtungen können so gesteuert, ausgebildet oder angeordnet werden, daß die Wandabschnitte 54, 56 zur gleichen Zeit eine im wesentlichen horizontale Lage einnehmen können, wie dies in Figur 5 gezeigt ist. Beide Wandabschnitte 54, 56 können als Einheit entlang der Führungsvorrichtung 32 bewegt werden.

Das Gelenk 62 ist im wesentlichen als ein Schlitten gebildet, der für jeden Wandabschnitt 54, 56 eine Schwenkachse aufweist und in der Führungsvorrichtung 32 aufgenommen ist.

Obwohl die Wandabschnitte 54, 56 mit Walzen 50 dargestellt sind, können die Walzen 50 auch durch Rollen 48 ersetzt werden, über die Riemen oder Ketten geführt werden. Die Wandabschnitte 54, 56 können auch als eine mehrgliedrige Einheit ausgebildet, so daß sie aus einer Vielzahl gelenkig miteinander verbundener Segmente bestehen, die jedoch die Formen einnehmen können, die in den Figuren 3 und 4 gezeigt sind.

Die Wandungen 58 erstrecken sich seitlich der Walzen 50 und bilden die vertikalen Seitenwände des Ballenpreßgehäuses 8. Die Wandungen 58 sind so bemessen, daß sie sowohl den Ballenpreßraum 30 seitlich schließen, wenn sich die Wandabschnitte 54, 56 in ihrer unteren Lage befinden, als auch eine Kammer 72 bilden, die unten von dem vorderen Förderer 42 und hinten von der Vorderseite des vorderen Wandabschnitts 54 begrenzt wird. Die Seitenbleche 40 ragen in geringem Maß in die Kammer 72 hinein, so daß das Erntegut sicher in diese geführt wird. Die Seitenbleche 40 und die Wandungen 58 können auch miteinander verbunden sein, so daß die Seitenbleche 40 ganz oder nur bereichsweise verschoben werden, wenn sich die Wandungen 58 verschieben. Die Außenseiten der Wandungen 58 liegen den Innenseiten der Schienen 70 gegenüber, so daß sich der gesamte obere Gehäuseabschnitt 20 innerhalb des zwischen den Schienen 70 gelegenen Raums verschieben läßt. Die Wandungen 58 fluchten mit den Seitenwänden 52 des unteren Gehäuseabschnitts 18 und schließen auf deren Oberkante in einer horizontalen Schnittstelle ab, so daß sie keine Kollision erleiden, wenn der obere Gehäuseabschnitt 18 horizontal bewegt wird.

An dem unteren und der Einlaßöffnung 60 zugelegenen Endbereich des vorderen Wandabschnitts 54 ist der Zuförderer 26 vorgesehen, und zwar derart, daß er mit dem Wandabschnitt 54 verschwenken kann.

Die Wickelvorrichtung 22 dient dem Einwickeln eines fertigen Rundballens 28 in Folie, so daß dieser feuchtes Erntegut enthaltende Rundballen 28 zu Silagefutter wird. Die Wickelvorrichtung 22 enthält einen Träger 64, einen Wickelarm 66 und Wickelmaterial 68.

Der Träger 64 greift an dem Fahrgestell 12 oder an der Führungsvorrichtung 32 an und erstreckt sich bis oberhalb der Führungsvorrichtung 32. In dem Träger 64 befindet sich ein nicht näher bezeichneter Antrieb.

Der Wickelarm 66 ist an dem Träger 64 um eine vertikale Achse drehbar gelagert und verläuft von der Drehachse aus zunächst in radialer Richtung nach außen und anschließend axial, um das Wickelmaterial 68 tragen und abgeben zu können. Der Wickelarm 66 ist so bemessen und angeordnet, daß sich der das Wickelmaterial 68 tragende Bereich diametral um den Rundballen 28 bewegen kann. Anstatt eines können auch mehrere Wickelarme 66 vorgesehen werden, um die Wickelzeit zu verkürzen. Der Wickelarm 66 wird von dem Antrieb in dem Träger 64 in Drehung versetzt.

Das Wickelmaterial 68 wird regelmäßig von einer Stretchfolie gebildet, die unter hoher Spannung auf den Rundballen 28 aufgebracht wird und aufgrund der Adhäsion auf darunterliegenden Lagen haftet. Während das Wickelmaterial 68 auf den Rundballen 28 aufgelegt wird, dreht der Rundballen 28 langsam weiter, so daß die einzelnen Lagen zueinander versetzt zu liegen kommen.

Die Wickelvorrichtung 22 ist außerdem mit nicht gezeigten Halte-, Spann- und Trennvorrichtungen für das Wickelmaterial 28 versehen, die jeweils nicht gezeigt, an sich aber bekannt sind und dazu dienen, den Anfang und das Ende des Ballenwickelvorgangs einzuleiten. Der Ballenwickelvorgang erfolgt stets nach Auflage des Rundballens 28 auf dem rückwärtigen unteren Förderer 44. Der Wickelarm 66- kann sich frei um den Rundballen 28 herum bewegen, sobald die oberen Wandabschnitte 54, 56 aus deren Wirkungsbereich entfernt, d. h. angehoben und nach vorne bewegt sind.

Die Bindevorrichtung 24 ist zwar als eine Netzbindevorrichtung ausgebildet und auf der Vorderseite des vorderen Wandabschnitts 54 auf oder an den Wandungen 58 angebracht; statt dessen könnte auch eine Garnbindung oder Folienbindung vorgesehen werden. Das Bindematerial wird jeweils in bekannter Weise entweder durch die Einlaßöffnung 60 oder durch einen Spalt zwischen den Walzen 50 in das Ballenpreßgehäuse 8 eingeführt und um den sich drehenden Rundballen 28 gewunden. Die Bindevorrichtung 24 befindet sich an dem oberen Gehäuseabschnitt 20, weil der Rundballen 28 gebunden wird, solange er noch unter dem Druck in dem Ballenpreßgehäuse 8 steht.

Der Zuförderer 26 ist als ein angetriebener Rotor ausgebildet, der um eine horizontale Achse dreht und mit Fingern, Zinken oder anderen Förderelementen bestückt ist. Die Anordnung des Zuförderers 26 ist so getroffen, daß das von dem vorderen Förderer 42 ankommende Erntegut sicher in die Einlaßöffnung 60 eingezogen wird und sich nicht vor dieser staut. Diese Funktion wird von dem Zuförderer 26 erfüllt, indem er im Uhrzeigerdrehsinn, d. h. vorwärts, dreht. Wenn der Zuförderer 26 rückwärts dreht, bewegt er das Erntegut von der Einlaßöffnung 60 und fördert es in den Bereich des dann zu bildenden Ballenpreßraums 30. Andererseits könnte der untere vordere Förderer 42 zeitweise auch langsam in einer anderen Richtung angetrieben werden als der untere rückwärtige Förderer 44 oder stillgesetzt werden und das Erntegut somit selbst von der Einlaßöffnung 60 wegbewegen oder fernhalten.

Die Führungsvorrichtung 32 ist in dem bevorzugten Ausführungsbeispiel mit Schienen 70 versehen, die sich über die ganze Länge des Fahrgestells 12 erstrecken und derart stabil ausgeführt bzw. angeordnet sind, daß sie das Gewicht-des oberen Gehäuseabschnitts 20 tragen können. Die Führungsvorrichtung 32 ist mit einem nicht näher gezeigten Antrieb versehen, der z. B. eine Zahnstange und einen Zahnradmotor oder Seilzüge und Gleit- oder Rollführungen enthält, mit denen der obere Gehäuseabschnitt 20 entlang des Fahrgestells 12 bewegt werden kann.

Die Schienen 70 sind parallel zueinander und wesentlich oberhalb des Fahrgestells 12 angeordnet und so geformt, z. B. durch ein U-, L- oder T-Profil, daß das Gelenk 62 und evtl. Stabilisierungsstreben zur Halterung des oberen Gehäuseabschnitts 20 darin längs geführt werden können.

Nach alledem ergibt sich folgende Funktion der Rundballenpresse 10.

Die Beschreibung beginnt bei einem Zustand, bei dem die Rundballenpresse 10 kein Erntegut aufgenommen hat und sich der obere Gehäuseabschnitt 20 oberhalb des rückwärtigen unteren Förderers 44 befindet. Dieser Zustand ist im wesentlichen in Figur 1 dargestellt, wobei jedoch dort bereits aufgenommenes Erntegut gezeigt ist.

Zum Beginn des Betriebs der Rundballenpresse 10 nimmt die Aufnahmevorrichtung 16 Erntegut vom Boden auf und fördert es durch den Kanal zwischen dem Boden 36 und dem Leitblech 38 nach oben und hinten in den Kanal zwischen den Seitenblechen 40 und dem vorderen unteren Förderer 42. Der vordere untere Förderer 42 trägt das Erntegut auf dem Förderband 46, das gegebenenfalls mit Leisten oder anderen Mitnehmern besetzt ist, bis zu der Einlaßöffnung 60, wo es von dem Zuförderer 26 erfaßt und durch die Eingangsöffnung 60 in den Ballenpreßraum 30 gedrängt wird; dieser Zustand ist in Figur 1 gezeigt.

Das Erntegut sammelt sich auf dem unteren rückwärtigen Förderer 44 an, bis es als Haufe von den sich drehenden Walzen 50 in Drehung versetzt wird. Je mehr sich der Ballenpreßraum 30 füllt, desto mehr wird das Erntegut zu einem Rundballen 28 verdichtet und regelmäßig gedreht; dieser Zustand ist in Figur 2 dargestellt.

Sobald der Rundballen 28 die gewünschte Dichte erreicht hat, wird die Bindevorrichtung 24 in Betrieb genommen und der Rundballen 28 mit Netz, Garn oder dergl. umwickelt, wie dies bekannt ist. Während des Bindevorgangs arbeitet die Aufnahmevorrichtung 16 weiter und gibt dem vorderen unteren Förderer 42 Erntegut auf. Dieses Erntegut wird nicht in die Einlaßöffnung 60 gedrängt, sondern von dem nunmehr rückwärts drehenden Zuförderer 26 vor dieser angesammelt; dieser Zustand ist in Figur 3 dargestellt.

Nach dem Bindevorgang und während sich Erntegut hauptsächlich in der Kammer 72 ansammelt, wird der vordere und der rückwärtige Wandabschnitt 54, 56 nach oben geschwenkt und geben den Rundballen 28 frei; dieser Zustand geht aus Figur 4 hervor.

Während die Wandabschnitte 54 und 56 angehoben sind, werden sie entlang der Führungsvorrichtung 32 nach vorne über den Rundballen 28 und das auf dem vorderen Förderer 42 angesammelte Erntegut hinweg verschoben. Da beide Wandabschnitte 54, 56 angehoben sind, ist der Ballenpreßraum 30 vorne und hinten offen, und der vordere Wandabschnitt 54 schiebt während seiner Bewegung das Erntegut nicht auf dem unteren vorderen Förderer 42 vor sich her. In der Endstellung des oberen Gehäuseabschnitts 20 befinden sich beide Wandabschnitte 54, 56 wie ein Greifer oberhalb des auf dem vorderen unteren Förderer 42 gebildeten Haufens Erntegut; dieser Zustand ist in Figur 5 gezeigt.

Nachdem der obere Gehäuseabschnitt 20 nach vorne geschoben, gerollt oder sonstwie bewegt worden ist, werden die beiden Wandabschnitte 54, 56 abgesenkt, so daß sie das Erntegut zwischen sich und dem unteren vorderen Förderer 42 erfassen und einen vorne gelegenen Ballenpreßraum 30 bilden. Das von der Aufnahmevorrichtung 16 herangeführte Erntegut gelangt nunmehr wieder durch die Einlaßöffnung 60 in den Ballenpreßraum 28, gegebenenfalls unterstützt von dem Zuförderer 26, der nunmehr wieder im Uhrzeigerdrehsinn mit Blick auf die Zeichnung angetrieben wird. Während das Erntegut in dem vorderen Ballenpreßraum 30 zumindest vorverdichtet wird, wird in dem Fall, daß der zuvor gebildete Rundballen 28 mit Folie umwickelt werden soll, der oder die Wickelarme 66 in Drehung versetzt und legen dabei Wickelmaterial 68 auf den Rundballen 28 auf, bis eine luftdichte Oberfläche erreicht ist; dieser Zustand ist in Figur 6 gezeigt.

Sobald der Rundballen 28 fertig gewickelt ist, wird der Wickelvorgang beendet und der oder die Wickelarme 66 in eine Stellung gebracht, in der sie einem Entladen des Rundballens 28 nicht hinderlich sind; dieser Zustand ergibt sich aus Figur 7.

Nach dem Wickelvorgang wird der rückwärtige untere Förderer 44 entgegen dem Uhrzeigerdrehsinn vertikal geschwenkt, so daß der auf ihm ruhende Rundballen 28 nach hinten auf den Boden abgekippt wird, wobei in dem vorne gelegenen Ballenpreßraum 30 weiterhin Erntegut verdichtet wird; dieser Zustand ist in Figur 8 dargestellt.

Schließlich wird der obere Gehäuseabschnitt 20 mit dem darin befindlichen Erntegut auf der sich nach hinten bewegenden Oberfläche des vorderen unteren Förderers 42 bis zu dem rückwärtigen unteren Förderer 44 bewegt, wo der Preßvorgang fortgesetzt und beendet wird; dieser Zustand entspricht dem in Figur 1 dargestellten.

## Patentansprüche

1. Rundballenpresse (10) mit einem Ballenpreßgehäuse (8), das sich aus einem unteren und einem oberen Gehäuseabschnitt (18, 20) zusammensetzt, wobei der obere Gehäuseabschnitt (20) in einen vorderen und einen rückwärtigen Wandabschnitt (54, 56) gegliedert ist, die zur Öffnung eines Ballenpreßraums (30) vertikal beweglich sind, **dadurch gekennzeichnet, daß** die Gehäuseabschnitte (18, 20) mit Bezug aufeinander horizontal beweglich ist.

2. Rundballenpresse nach Anspruch 1, **dadurch gekennzeichnet, daß** ausschließlich der vordere und der rückwärtige Wandabschnitt (54, 56) den oberen Gehäuseabschnitt (20) bilden.

3. Rundballenpresse nach Anspruch 1 oder 2, **dadurch gekennzeichnet, daß** der vordere und der rückwärtige Wandabschnitt (54, 56) gemeinsam in eine im wesentlichen horizontale und von dem unteren Gehäuseabschnitt (18) um die Höhe eines in dem Ballenpreßraum (30) gebildeten Rundballens (28) beabstandete Stellung bringbar sind.

4. Rundballenpresse nach einem oder mehreren der vorherigen Ansprüche, **dadurch gekennzeichnet, daß** der untere Gehäuseabschnitt (18) einen vorderen und einen rückwärtigen Förderer (42, 44) oder einen gemeinsamen Förderer enthält.

5. Rundballenpresse nach einem oder mehreren der vorherigen Ansprüche, **dadurch gekennzeichnet, daß** der untere Gehäuseabschnitt (18) ganz oder teilweise als Bandförderer ausgebildet ist.

6. Rundballenpresse nach einem oder mehreren der vorherigen Ansprüche, **dadurch gekennzeichnet, daß** im Bereich und oberhalb des rückwärtigen unteren Förderers (44) eine Wickelvorrichtung (22) vorgesehen ist.

7. Rundballenpresse nach einem oder mehreren der vorherigen Ansprüche, **gekennzeichnet durch** seitliche Wandungen (58), die mit den oberen Wandabschnitten (54, 56) horizontal beweglich ausgebildet sind.

8. Rundballenpresse nach einem oder mehreren der vorherigen Ansprüche, **dadurch gekennzeichnet, daß** der rückwärtige untere Förderer (44) vertikal schwenkbar ausgebildet ist.

9. Rundballenpresse nach einem oder mehreren der vorherigen Ansprüche, **dadurch gekennzeichnet, daß** im Bereich eines der oberen Wandabschnitte (54, 56) eine Bindevorrichtung (24) vorgesehen ist.

10. Rundballenpresse nach einem oder mehreren der vorherigen Ansprüche, **dadurch gekennzeichnet, daß** zwischen dem oberen und dem unteren Gehäuseabschnitt (20, 18) eine Einlaßöffnung (60) vorgesehen ist, in deren Bereich und insbesondere an dem vorderen oberen Wandabschnitt (54) sich ein Zuförderer (26) befindet.

11. Rundballenpresse nach einem oder mehreren der vorherigen Ansprüche, **dadurch gekennzeichnet, daß** der untere Gehäuseabschnitt (20, 18) auf einer Kreislinie gelegene Walzen 50 aufweist.

12. Rundballenpresse nach einem oder mehreren der vorherigen Ansprüche, **dadurch gekennzeichnet, daß** die Wickelvorrichtung (22) wenigstens einen um eine senkrechte Achse rotierenden Wickelarm (66) aufweist.

13. Rundballenpresse nach einem oder mehreren der vorherigen Ansprüche, **dadurch gekennzeichnet, daß** der obere Gehäuseabschnitt (20) auf, in oder an einer Führungsvorrichtung (32) horizontal beweglich gelagert ist.

14. Rundballenpresse nach einem oder mehreren der vorherigen Ansprüche **dadurch gekennzeichnet, daß** der Zuförderer (26) vorwärts und rückwärts antreibbar ist.
